(19) Europäisches Patentamt
European Patent Office
Office européen des brevets

(11) **EP 1 533 335 B1**

(12) **EUROPÄISCHE PATENTSCHRIFT**

(45) Veröffentlichungstag und Bekanntmachung des Hinweises auf die Patenterteilung:
**01.10.2008 Patentblatt 2008/40**

(51) Int Cl.:
*C08J 9/18* (2006.01)     *C08J 9/224* (2006.01)

(21) Anmeldenummer: **04024706.6**

(22) Anmeldetag: **16.10.2004**

(54) **Verfahren zur Herstellung beschichteter, expandierter Polyolefinpartikel**

Method for producing coated and expanded polyolefin particles

Procédé de production de particules expansées et enrobées de résine de polyoléfine

(84) Benannte Vertragsstaaten:
**AT BE BG CH CY CZ DE DK EE ES FI FR GB GR HU IE IT LI LU MC NL PL PT RO SE SI SK TR**

(30) Priorität: **11.11.2003 DE 10352894**

(43) Veröffentlichungstag der Anmeldung:
**25.05.2005 Patentblatt 2005/21**

(73) Patentinhaber: **BASF SE**
**67056 Ludwigshafen (DE)**

(72) Erfinder:
• **Naegele, Dieter, Dr.**
**67550 Worms (DE)**
• **Braun, Frank, Dr.**
**67063 Ludwigshafen (DE)**
• **Keppeler, Uwe, Dr.**
**67126 Hochdorf-Assenheim (DE)**

(56) Entgegenhaltungen:
**EP-A- 0 831 115     EP-A- 1 229 070
WO-A-02/062882**

## Beschreibung

Die Erfindung betrifft ein Verfahren zur Herstellung von beschichteten, expandierten Polyolefinpartikeln mit einer Schüttdichte von 40 bis 200 g/l, dadurch gekennzeichnet, dass man

a) ein Polyolefingranulat in Suspension unter Überdruck bei mindestens 100°C mit einem Treibmittel imprägniert und danach die Suspension bei mindestens 100°C schlagartig entspannt, wobei die imprägnierten Polyolefinpartikel zu expandierten Polyolefinpartikeln aufschäumen, und

b) auf die expandierten Polyolefinpartikel eine Antiverklebungsmittelbeschichtung aufbringt, die hydrophile oder hydrophobe Kieselsäure, oder ein Metallsalz, einen Ester oder ein Amid einer langkettigen Carbonsäure, oder deren Mischungen, enthält,

sowie die nach dem Verfahren erhältlichen expandierten Polyolefinpartikel. Außerdem betrifft die Erfindung ein Verfahren zur Herstellung von expandiertem Polyolefin mit einer Dichte von 8 bis 120 g/l, dadurch gekennzeichnet, dass man die vorstehenden expandierten (vorgeschäumten) Polyolefinpartikel durch Verschäumen (Nachschäumen) weiter expandiert. Schließlich betrifft die Erfindung das nach diesem Verfahren erhältliche expandierte (nachgeschäumte) Polyolefin.

Expandierte Polypropylen-Schaumpartikel (EPP) sind aufgrund ihrer niedrigen Dichte sehr voluminös, was bei Transport und Lagerung wegen des hohen Raumbedarfs nachteilig ist. Diesen Nachteil vermeiden expandierbare Polypropylenpartikel (XPP), wie sie in der WO 01/29119 beschrieben werden. Sie enthalten in feiner Verteilung eingeschlossenes, jedoch noch nicht expandiertes Treibmittel und haben eine vergleichsweise hohe Dichte. Als Treibmittel werden üblicherweise Alkane wie Pentan oder Hexan, oder Ketone wie Alkylbutanone oder -pentanone verwendet. Die XPP-Partikel werden in der Regel mit Wasserdampf aufgeschäumt, wobei Partikel geringerer Dichte entstehen. Allerdings verkompliziert sich das Aufschäumen dadurch, dass dazu ein vergleichsweise hoher Wasserdampfdruck erforderlich ist und das freigesetzte Treibmittel aufwändig wieder aufgefangen werden muss.

Bei der Herstellung expandierter Partikel (EPP) werden diese Nachteile vermieden, da das Treibmittel bereits bei der Partikelherstellung aufgefangen werden kann, und zum Aufschäumen ein niedrigerer Druck erforderlich ist.

Aus den expandierten Partikeln wird schließlich das gewünschte Formteil hergestellt, üblicherweise durch Erhitzen der Partikel in einer geschlossenen Form, wobei die Partikel miteinander zum Formteil verschweißen.

Dabei ist jedoch problematisch, dass die Partikel während Transport und Lagerung, oder auch bei der Verschweißung zum Formteil, miteinander verkleben können.

Die DE 195 41 725 C1 offenbart expandierbare Styrol-Perlpolymerisate, die mit einer Beschichtung aus Glycerintristearat, hydophobem Silikat sowie ggf. Zinkstearat und Glycerinmonostearat versehen sind.

Die JP-A 60/181139 (Abstract) lehrt geschäumte Polypropylenpartikel, die mit einer Beschichtung aus chloriertem Polypropylen und einem Antiblockingmittel, z.B. anorganischen Partikeln oder Fettsäureamiden oder Fettsäuremetallsalzen versehen sind. Die beschichteten Partikel müssen in einem zusätzlichen Schritt getrocknet werden, um ein Verkleben zu verhindern.

Gemäß der JP-A 58/152027 (Abstract) werden Polyolefinpartikel mit einem Treibmittel imprägniert, expandiert und mit einer organischen Verbindung beschichtet, deren Schmelzpunkt maximal 100°C und deren Siedepunkt mindestens 150°C beträgt, wobei Phthalsäureester und Fettsäureester genannt werden.

Die WO 02/062882 A1 offenbart expandierbare, treibmittelhaltige Polyolefinpartikel (XPP) mit einer Schüttdichte von mehr als 400 g/l, die mit einem Salz und/oder Ester und/oder Amid einer langkettigen Carbonsäure als Antiverklebungsmittel beschichtet sind. Als Antiblockmittel kann z.B. Kieselsäure mitverwendet werden. Zwar erwähnt die Schrift, dass die erhaltenen Partikel ein- oder mehrmalig verschäumt werden können, jedoch kann sich die Zusammensetzung oder Menge der Beschichtung unter den Bedingungen des Aufschäumens, z.B. mit Wasserdampf, verändern. Die Partikel werden hergestellt, indem man in einem Rührreaktor in Wasser suspendiertes Polyolefingranulat unter Druck bei z.B. 140°C mit Treibmittel imprägniert. Danach wird wieder auf unter 100°C, z.B. auf Raumtemperatur, abgekühlt, und erst dann entspannt. Alternativ wird Polyolefingranulat mit dem Treibmittel in einem Extruder vermischt, wobei man ein Aufschäumen der extrudierten Mischung durch entsprechende Drucke und Temperaturen verhindert. Dieses Verfahren unterscheiden sich vom erfindungsgemäßen Verfahren, bei dem die erhitzte Suspension der treibmittelimprägnierten Partikel bei mindestens 100°C schlagartig entspannt wird. Dadurch entstehen Partikel mit anderen Eigenschaften, sichtbar z.B. an einem DSC-Diagramm (siehe unten).

Es bestand die Aufgabe, den geschilderten Nachteilen abzuhelfen. Insbesondere bestand die Aufgabe, ein Verfahren zur Herstellung von expandierten Polyolefinpartikeln bereitzustellen, die in einem späteren Schritt zu Polyolefin, z.B. Polyolefinpartikeln, mit geringerer Dichte verschäumt werden können, ohne dabei zu verkleben.

Die nachgeschäumten Partikel sollten sich problemlos zu Formteilen verschweißen lassen. Insbesondere sollte vor dem Verschweißen keine weitere Behandlung der Partikel erforderlich sein.

Demgemäß wurden das eingangs definierte Verfahren zur Herstellung der (vorgeschäumten) expandierten Polyolefinpartikel gefunden, außerdem die nach dem Verfahren erhältlichen Partikel. Weiterhin wurde das eingangs genannte Verfahren zur Herstellung der nachgeschäumten expandierten Polyolefine gefunden, und die damit erhältlichen Polyolefine.

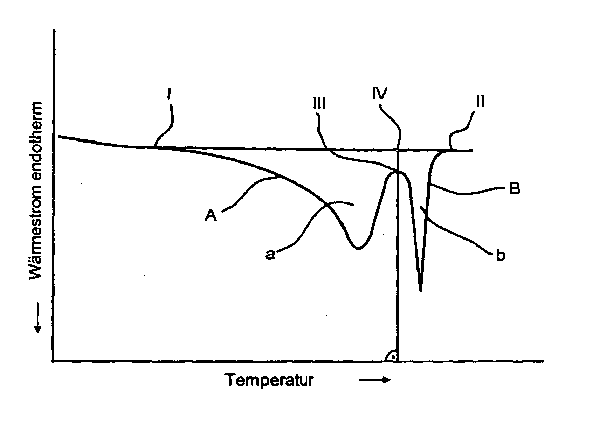

Bevorzugte Ausführungsformen der Erfindung sind den Unteransprüchen zu entnehmen. Abb. 1 zeigt schematisch ein DSC-Diagramm der erfindungsgemäßen Polyolefine, und dessen Auswertung.

In Schritt a) des erfindungsgemäßen Verfahrens wird das Polyolefingranulat in Suspension unter Überdruck bei mindestens 100°C mit einem Treibmittel imprägniert und danach die Suspension bei mindestens 100°C schlagartig entspannt. Dabei schäumen die imprägnierten Polyolefinpartikel "explosionsartig" zu expandierten Polyolefinpartikeln auf. Das Verfahren wird deshalb auch als Explosionsexpansionsverfahren bezeichnet, und ist beispielsweise in den EP-A-Schriften 53 333 und 831 115 beschrieben.

Als Polyolefine sind insbesondere geeignet:

a) Homopolypropylen,

b) Randomcopolymere des Propylens mit 0,1 bis 15, bevorzugt 0,5 bis 12 Gew.-% eines Comonomeren. Bevorzugtes Comonomer ist Ethylen oder ein $C_{4\text{-}10}$-$\alpha$-Olefin oder deren Mischungen. Besonders bevorzugte Randomcopolymere sind Copolymere von Propylen mit 0,5 bis 6 Gew.-% Ethylen oder mit 0,5 bis 15 Gew.-% But-1-en, oder ein Terpolymer aus Propylen, 0,5 bis 6 Gew.-% Ethylen und 0,5 bis 6 Gew.-% But-1-en,

c) Mischungen der unter a) oder b) genannten Polymere mit 0,1 bis 75, bevorzugt 3 bis 50 Gew.-% eines Polyolefin-Elastomeren, z.B. eines Ethylen-Propylen-Blockcopolymeren mit 30 bis 70 Gew.-% Propylen,

d) Polyethylene, beispielsweise LD (low density), LLD (linear low density), MD (medium density) oder HD (high density), HMW (high molecular weight) oder UHMW (ultra high molecular weight), oder

e) Mischungen der unter a) bis d) genannten Polymere, wobei ggf. Phasenvermittler mitverwendet werden, um die Phasenanbindung der in manchen Fällen unverträglichen Polymere zu verbessern.

Der Kristallitschmelzpunkt geeigneter Polyolefine liegt üblicherweise im Bereich von 90 bis 170°C. Er ist beispielsweise als Peakmaximum im Differential Scanning Calorimetry (DSC)-Diagramm bestimmbar. Die Schmelzwärme der Polyolefine ist ebenfalls per DSC bestimmbar und beträgt im allgemeinen 20 bis 300 J/g. Der Schmelzflussindex (MFI, melt flow index) des Polyolefins beträgt in der Regel 0,1 bis 100 g/10 min, ermittelt bei 230°C und 2,16 kg Belastung für Propylenpolymere bzw. 190°C und 2,16 kg Belastung für Ethylenpolymere, nach DIN 53 735.

Bevorzugt verwendet man als Polyolefin ein Polypropylen. Bevorzugte Polyolefine sind Homo- oder Copolymere des Propylens mit bis zu 15 Gew.-% Etylen und/oder But-1-en, besonders bevorzugt sind Propylen-Ethylen-Copolymere mit 1 bis 5 Gew.-% Ethylen. Sie weisen einen Kristallitschmelzpunkt von 130 bis 160°C, und eine Dichte von etwa 0,9 g/cm$^3$, auf.

Die Polyolefine sind bekannt und können nach üblichen Verfahren erhalten werden, beispielsweise nach dem Hochdruck- (ICI), Mitteldruck- (Phillips), Niederdruck- (Ziegler), Gasphasen-, Gasphasenwirbelbett- oder Metallocen-Verfahren.

Das Polyolefin kann die üblichen Zusatzstoffe enthalten, wie Antioxidantien, Stabilisatoren, Flammschutzmittel, Wachse, Nucleierungsmittel, Füllstoffe, Pigmente und Farbstoffe.

Das Polyolefin kann mit bis zu 50 % seines Gewichts eines weiteren Thermoplasten mit einer Glasübergangstemperatur (bestimmbar z.B. als Wendepunkt im DSC-Diagramm) unterhalb von 180°C abgemischt sein. Geeignete Thermoplasten sind z.B. Polyamide in Mengen von 5 bis 40 Gew.-%, wobei der Mischung übliche Phasenvermittler, z.B. Blockcopolymerisate, wie Exxelor P 1015 (Fa. Exxon), zugesetzt werden können.

Es hat sich gezeigt, dass die Erfindung auch ohne Zumischen eines solchen weiteren Thermoplasten durchführbar ist. Dies ist insofern bevorzugt, als durch einen Fremdthermoplasten die Recyclierbarkeit des Polyolefins bzw. des daraus hergestellten Schaumstoffs leidet. Kautschukartige Ethylen /Propylen-Copolymerisate, die zur Elastifizierung zugesetzt werden können, zählen in diesem Sinne nicht zu den weiteren Thermoplasten.

Zweckmäßigerweise wird das Polyolefin als Granulat eingesetzt. Geeignet ist z.B. ein sog. Minigranulat, ein Polyolefingranulat mit einem bevorzugten mittleren Durchmesser von 0,2 bis 10, insbesondere von 0,5 bis 5 mm. Dieses meist zylinderförmige oder runde Minigranulat wird hergestellt durch Extrudieren des Polyolefins, gegebenenfalls zusammen mit dem zuzumischenden Thermoplasten, und weiteren Zusatzstoffen, Auspressen aus dem Extruder, gegebenenfalls Abkühlen und Granulieren. Das Granulat kann z.B. kugelförmig, zylindrisch oder plättchenförmig geformt sein. Unter Polyolefingranulat soll auch Polyolefinpulver, -grieß und andere Polyolefinpartikel verstanden werden.

Als Treibmittel können organische Flüssigkeiten oder anorganische Gase oder Gemische davon eingesetzt werden. Als Flüssigkeiten kommen halogenierte Kohlenwasserstoffe in Frage, bevorzugt sind jedoch gesättigte, aliphatische Kohlenwasserstoffe, insbesondere solche mit 3 bis 8 C-Atomen. Besonders bevorzugt ist n-Butan. Geeignete anorganische Gase sind Stickstoff, Luft, Ammoniak oder Kohlendioxid.

Das Treibmittel wird in Mengen von vorzugsweise 1 bis 50, insbesondere 3 bis 30 Gew.-Teilen, bezogen auf 100 Gew.-Teile Polymer, eingesetzt. Man kann das Treibmittel z.B. vor oder während des Aufheizens des Reaktorinhalts (siehe unten) zugeben.

Das Polyolefingranulat kann ein Nucleierungsmittel enthalten. Erforderlich ist dies jedoch nicht. Das Polyolefin kann vorzugsweise 0,001 bis 10, vorzugsweise 0,1 bis 5 und insbesondere 0,5 bis 3 Gew.-% eines Nucleierungsmittels enthalten. Geeignet sind z.B. Talkum und/oder Wachse sowie Ruß, Graphit und pyrogene Kieselsäuren. Sie bewirken, dass ein feinzelliger Schaum entsteht, in manchen Fällen ermöglichen sie überhaupt erst das Schäumen.

Das Imprägnieren des Granulats mit dem Treibmittel erfolgt in Suspension. Bevorzugt verwendet man Wasser als Suspensionsmedium. Die Suspension enthält neben dem Suspensionsmedium und dem Polymergranulat bevorzugt ein Suspensionshilfsmittel, das die gleichmäßige Verteilung des Granulats im Suspensionsmedium gewährleistet, d.h. die Granulatsuspension stabilisiert. Bei den - bevorzugten - wässrigen Suspensionen verwendet man als Suspensionshilfsmittel beispielsweise wasserunlösliche anorganische Stabilisatoren, wie Tricalciumphosphat, Magnesiumpyrophosphat, Metallcarbonate; ferner Polyvinylalkohol und Tenside, wie Natriumdodecylarylsulfonat. Zu Einzelheiten siehe beispielsweise die EP-A 1 095 971.

Auf den Zusatz von Suspensionshilfsmitteln kann u.a. verzichtet werden, wenn das Suspensionsmedium nach WO-A 99/10419 eine niedrigere Dichte aufweist als das suspendierte Granulat. Dies ist z.B. der Fall, wenn das Suspensionsmedium Ethanol oder eine Mischung von Ethanol mit bis zu 50 Gew.-% Wasser ist.

In der Regel setzt man auf 100 Gew.-Teile Polyolefin, 100 bis 500 Gew.-Teile Suspensionsmedium, beispielsweise Wasser, ein, sowie 0,01 bis 10, insbesondere 0,1 bis 10 und besonders bevorzugt 1 bis 7 Gew.-Teile Suspensionshilfsmittel.

Üblicherweise arbeitet man in Schritt a) des erfindungsgemäßen Verfahrens (Imprägnierung und Aufschäumen) absatzweise in einem Imprägnierbehälter, z.B. in einem Rührkesselreaktor. In den Reaktor werden Polyolefingranulat, Wasser bzw. ein anderes Suspensionsmedium, ggf. das Suspensionshilfsmittel, sowie das Treibmittel eindosiert und der Reaktor verschlossen. Danach wird der Reaktorinhalt wird auf eine Imprägniertemperatur von mindestens 100°C erhitzt. Die Treibmittel kann dabei vor, während oder nach dem Aufheizen des Reaktorinhalts zugefügt werden. Es kann auf einmal oder in Teilportionen zugeführt werden.

Die Imprägniertemperatur sollte in der Nähe der Erweichungstemperatur des Polyolefins liegen. Sie kann 40°C unter bis 25°C über der dem Kristallitschmelzpunkt des Polyolefins liegen, bevorzugt 20°C darunter bis 20°C darüber, insbesondere 2 bis 10°C darüber. Bei Polypropylen sind Imprägniertemperaturen von 110 bis 180, insbesondere 130 bis 160°C bevorzugt.

Je nach Menge und Art des Treibmittels sowie nach der Höhe der Temperatur stellt sich im verschlossene Reaktor ein Druck (Imprägnierdruck) ein, der im allgemeinen 2 bis 100 bar (absolut) beträgt. Erforderlichenfalls kann man den Druck durch ein Druckregelventil oder Nachpressen von Treibmittel regulieren.

Bei den Imprägnierbedingungen (erhöhte Temperatur und Überdruck) diffundiert Treibmittel in die Pololefingranulatpartikel hinein. Die Imprägnierdauer beträgt im allgemeinen 0,5 bis 10 Stunden. Weitere Einzelheiten sind beispielsweise der EP-A 1 095 971 zu entnehmen.

Nach dem Imprägnieren wird die Suspension erfindungsgemäß bei mindestens 100°C schlagartig entspannt. Der Reaktorinhalt wird also nicht, wie beispielsweise in der genannten WO 02/062882, vor dem Entspannen auf unter 100°C und damit soweit abgekühlt, dass sich das Polyolefin wieder verfestigt und das Treibmittel einschließt. Vielmehr wird die erhitzte Suspension, ohne ein solches vorheriges Abkühlen auf unter 100°C, unmittelbar entspannt. Allerdings kann man geringfügig abkühlen, beispielsweise von 140°C Imprägniertemperatur auf 120°C Entspannungstemperatur.

Beim Entspannen expandiert das zuvor in die Polyolefinpartikeln diffundierte Treibmittel "explosionsartig" und schäumt die erweichten Partikel auf. Man erhält expandierte Polyolefinpartikel, wobei sich die Eigenschaften, insbesondere das DSC-Diagramm, von den gemäß der WO 02/062882 erhaltenen Partikeln unterscheiden.

Üblicherweise wird die Suspension durch eine Düse, ein Ventil oder eine andere geeignete Vorrichtung entspannt. Man kann die Suspension unmittelbar auf Atmosphärendruck, beispielsweise 1013 mbar, entspannen. Bevorzugt wird jedoch in einen Zwischenbehälter entspannt, dessen Druck zum Aufschäumen der Polyolefinpartikel ausreicht, jedoch über dem Atmosphärendruck liegen kann. Geeigneterweise entspannt man auf einen Druck von z.B. 0,5 bis 5, insbesondere 1 bis 3 bar (absolut). Während des Entspannens kann man im Imprägnierbehälter den Imprägnierdruck konstant halten, indem man Treibmittel nachpresst.

In der Regel kühlt man die Suspension nach dem Entspannen ab, z.B. auf 10 bis 80°C, beispielsweise Raumtemperatur 23°C. Die expandierten Polyolefinpartikel werden danach in üblicher Weise aus der Suspension abgetrennt. Falls erforderlich kann man davor oder danach anhaftendes Suspensionshilfsmittel entfernen, indem man die Partikel mit einem geeigneten Reagens behandelt. Beispielsweise kann man mit einer Säure wie Salpetersäure, Salzsäure oder Schwefelsäure behandeln, um säurelösliche Suspensionshilfsmittel, z.B. Metallcarbonate oder Tricalciumphosphat, zu entfernen.

Anschließend werden die expandierten Partikel üblicherweise gewaschen und danach in an sich bekannter Weise, z.B. durch Abschleudern und Stromtrocknen, getrocknet. Jedoch kann man auch ohne Trocknen direkt die feuchten Partikel mit dem Antiverklebungsmittel beschichten, beispielsweise besprühen.

Die erhaltenen expandierten Polyolefinpartikel sind in der Regel zumindest annähernd kugelförmig mit einem Durchmesser von 1 bis 20, bevorzugt 1,5 bis 6 mm. Ihre Schüttdichte wird durch die Einsatzstoffe (u.a. Art und Menge von Polyolefin und Treibmittel) und Verfahrensbedingungen (Temperatur, Druck und Dauer der Imprägnierung, Ausgestaltung des Entspannens, etc.) bestimmt und beträgt erfindungsgemäß 40 bis 150 g/l. Bevorzugt liegt die Schüttdichte bei 50 bis 100 g/l.

In Schritt b) des erfindungsgemäßen Verfahrens wird auf die wie vorstehend beschrieben erhaltenen, expandierten Polyolefinpartikel eine Antiverklebungsmittelbeschichtung aufgebracht, die hydrophile oder hydrophobe Kieselsäure, oder ein Metallsalz, einen Ester oder ein Amid einer langkettigen Carbonsäure, oder deren Mischungen, enthält.

Als hydrophile Kieselsäure eignen sich neben den in Nassverfahren hergestellten Kieselgelen und Fällungskieselsäuren, insbesondere die pyrogenen Kieselsäuren. Sie weisen üblicherweise einen $SiO_2$-Gehalt über 99,8 Gew.-% auf. Sie sind hochdispers und ihre spezifische Oberfläche beträgt in der Regel 50 bis 600 $m^2$/g gemäß DIN 66131: 1993-07, ihre Primärteilchengröße 5 bis 500 nm. Gut geeignet sind beispielsweise die Aerosil®-Kieselsäuren von Fa. Degussa oder Cab-O-Sil® von Fa. Cabot, sowie Sipernat®-Fällungskieselsäuren von Fa. Degussa.

Geeignete hydrophobe Kieselsäuren können aus hydrophilen Kieselsäuren durch Nachbehandlung mit Hydrophobierungsmitteln erhalten werden. Solche Hydrophobierungsmittel sind z.B. organische Chlorsilane wie Dimethyldichlorsilan. Geeignete hydrophobe Kieselsäuren sind beispielsweise hydrophobe Aerosil®-Kieselsäuren von Degussa, insbesondere Aerosil® R 972. Dieses Produkt hat eine spezifische Oberfläche (BET) von etwa 110 $m^2$/g und die mittlere Größe der Primärteilchen beträgt 16 nm. Andere geeignete Produkte sind hydrophobe Sipernat®-Fällungskieselsäuren von Fa. Degussa, z.B. Sipernat® D17. Ebenfalls geeignet sind Kieselsäuren, die mit Siliconen hydrophobiert sind, sowie durch Hochtemperaturhydrolyse hergestellte Siliziumdioxide.

Unter langkettigen Carbonsäuren sollen solche mit 10 bis 22, bevorzugt 14 bis 18 C-Atomen verstanden werden. Sie können unverzweigt oder verzweigt, sowie aliphatisch, cycloaliphatisch oder (weniger bevorzugt) aromatisch, sein. Bevorzugt ist die langkettige Carbonsäure Stearinsäure.

Geeignete Metallsalze einer langkettigen Carbonsäure werden z.B. in "Metallic Soaps" von Szczepanek und Könen, Ullmann's Encyclopedia, 6. Ed., Wiley VCH, beschrieben, wobei Salze zwei- und dreiwertiger Metalle mit aliphatischen $C_{16}$-$C_{36}$-Monocarbonsäuren bevorzugt sind. Bevorzugt verwendet man ein Metallstearat, wobei das Metall ausgewählt ist aus Ca, Mg, Al, Zn und Ba. Besonders bevorzugt ist Calciumstearat.

Geeignete Ester einer langkettigen Carbonsäure sind beispielsweise Wachse oder Fette. Bevorzugt sind Glycerinester, insbesondere die Glycerinstearate wie Glycerintristearat, sowie der Zitronensäureester des Stearylalkohols (Stearylcitrat CTS).

Als Amid einer langkettigen Carbonsäure ist z.B. Erucasäureamid geeignet.

Die Antiverklebungsmittelbeschichtung kann außerdem ein Antistatikum enthalten. Geeignet sind z.B. Alkylsulfonate, Alkylsulfate und -phosphate, Fettalkoholethoxylate und quartäre Ammoniumverbindungen. Beispielsweise kann man das Natriumalkylsulfonat Armostat® 3002 von Fa. Akzo verwenden.

Auch Gemische der genannten Kieselsäuren, Metallsalze, Ester, Amide bzw. Antistatika können eingesetzt werden.

Die Antiverklebungsmittelbeschichtung enthält bevorzugt, bezogen auf die eingesetzte Beschichtung, wobei sich die Summe der Komponenten a) bis e) zu 100 Gew.-% ergänzt,

a) 1 bis 60, bevorzugt 10 bis 45 Gew.-% der hydrophilen und/oder hydrophoben Kieselsäure, gerechnet als Summe aller eingesetzten Kieselsäuren,
b) 10 bis 90, bevorzugt 15 bis 80 Gew.-% des Metallsalzes der langkettigen Carbonsäure,
c) 0 bis 90, bevorzugt 5 bis 70 Gew.-% des Esters der langkettigen Carbonsäure,
d) 0 bis 50, bevorzugt 0 bis 30 Gew.-% des Amids der langkettigen Carbonsäure, und
e) 0 bis 20, bevorzugt 0 bis 10 Gew.-% des Antistatikums.

Besonders bevorzugt enthält die Antiverklebungsmittelbeschichtung hydrophobe Kieselsäure, Calciumstearat, Glycerintristearat und ggf. ein Antistatikum, z.B. Natriumalkylsulfonat.

Bevorzugt enthält die Antiverklebungsmittelbeschichtung keine chlorierten Polypropylene.

Zur Herstellung der Antiverklebungsmittelbeschichtung gibt man üblicherweise die einzelnen Komponenten zusammen und durchmischt intensiv in üblichen Mischagregaten. Bevorzugt ist die erhaltene Beschichtung ein gut rieselfähiges Pulver.

Die Antiverklebungsmittelbeschichtung wird kontinuierlich oder diskontinuierlich durch übliche Beschichtungsverfahren auf die in Schritt a) erhaltenen expandierten Polyolefinpartikel aufgebracht. Solche Beschichtungsverfahren sind beispielsweise Sprühen oder Trommeln. In einer bevorzugten Ausführungsform bringt man die Beschichtung durch Sprühen oder Trommeln auf die expandierten Polyolefinpartikel auf. Beim Sprühen wird das Antiverklebungsmittel durch z.B. Düsen auf die Partikel gesprüht, beim Trommeln werden die Partikel zusammen mit dem Antiverklebungsmittel z.B. in einem Schaufelmischer gerührt und dadurch auf die Partikel aufgetragen.

In der Regel wird die Beschichtung bei 10 bis 50°C, beispielsweise Raumtemperatur 23°C, aufgebracht. Die Dauer des Auftragens ist so zu wählen, dass die Partikel gleichmäßig beschichtet sind und beträgt üblicherweise 1 bis 20 min. Üblicherweise beschichtet man die Partikel einmal, jedoch kann man erforderlichenfalls auch mehrere Beschichtungen aufbringen, wobei die Beschichtungen voneinander verschieden sein können.

Bevorzugt verwendet man 0,001 bis 5, insbesondere 0,01 bis 2 und besonders bevorzugt 0,05 bis 1 Gew.-% der Antiverklebungsmittelbeschichtung, bezogen auf die expandierten Polyolefinpartikel. Die beschichteten Partikel können ggf. weniger als die eingesetzte Menge der Beschichtung enthalten, da sich in manchen Fällen ein Teil des zugefügten Antiverklebungsmittels an der zur Beschichtung verwendeten Vorrichtung (Mischer, Düse, etc.) absetzt.

Man erhält erfindungsgemäß expandierte Polyolefinpartikel mit einer Schüttdichte von 40 bis 200 g/l, bevorzugt von 40 bis 150 g/l, die mit dem Antiverklebungsmittel beschichtet sind. Diese Partikel sind ebenfalls Gegenstand der Erfindung und werden auch als vorgeschäumte Partikel bezeichnet.

Die erfindungsgemäßen, vorgeschäumten Partikel können mit DSC (Differential Scanning Calorimetry) untersucht werden. Bevorzugt weisen die Partikel im DSC-Diagramm einen Doppelpeak auf, wie er in Abb. 1 dargestellt ist. Der Doppelpeak besteht aus einem bei niedrigerer Temperatur gelegenen Peak A (Niedertemperaturpeak), und einem bei höherer Temperatur gelegenen Peak B (Hochtemperaturpeak). Man erhält das DSC-Diagramm beispielsweise durch Aufheizen einer Probe der erfindungsgemäßen Partikel (Menge beispielsweise 1 bis 8 mg) bis 200°C mit einer Heizrate von 20 K/min in einem DSC-Kalorimeter.

Besonders bevorzugt weisen die erfindungsgemäßen, vorgeschäumten Partikel ein Peakflächenverhältnis F, definiert gemäß nachstehender Formel (1) als

$$F = \text{Fläche unter Peak B} / \text{Fläche unter Peak A} = b / a \qquad (1)$$

von 0,05 bis 0,8 ($\pm$0,02) auf. Insbesondere beträgt F 0,1 bis 0,5 ($\pm$0,02). Dabei bedeutet ($\pm$0,02), dass eine verfahrensbedingte Schwankungsbreite (Streuung) von $\pm$0,02 zu berücksichtigen ist.

Zur Bestimmung von F wird in Abb. 1 zunächst eine erste Gerade durch die Punkte I und II gezogen (Basislinie), wobei Punkt I bei 70°C liegt. Danach zieht man eine zweite Gerade rechtwinklig zur Temperatur-Achse durch den Punkt III bis zur ersten Gerade. Punkt III ist das Minimum zwischen den Peaks A und B, und der sich ergebende Schnittpunkt der beiden Geraden ist Punkt IV. Die Fläche unter Peak A, also a, wird demnach begrenzt durch den Peak A, die Strecke III-IV und die Strecke I-IV. Die Fläche unter Peak B, also b, wird begrenzt durch den Peak B, die Strecke III-IV und die Strecke IV-II. Weitere Einzelheiten sind Absatz [0036] und Fig. 1 der EP-B 963 827 zu entnehmen, auf die ausdrücklich verwiesen wird.

Die erfindungsgemäßen vorgeschäumten Partikel verkleben auch nach längerer Lagerung oder beim Transport nicht miteinander. Beispielsweise können sie problemlos transportiert werden, ohne zu verkleben. Insbesondere können die erfindungsgemäßen Partikel in einem späteren Schritt, dem Nachschäumen, zu Polyolefin mit geringerer Dichte verschäumt werden, ohne dabei zu verkleben.

Bereits diese vorgeschäumten, beschichteten Partikel können als solche zur Herstellung von Formteilen aller Art verwendet werden, beispielsweise indem man die Partikel in eine mit Dampfeintrittsöffnungen versehene Form einfüllt, die Form verschließt und die Partikel durch Zuführen von Wasserdampf miteinander zum Formteil verschweißt. Dabei ist eine vorherige Entfernung der Antiverklebungsmittelbeschichtung nicht erforderlich.

In einer bevorzugten Ausführungsform werden die erfindungsgemäßen, vorgeschäumten beschichteten Partikel jedoch nicht als solche verarbeitet, sondern zu Partikeln mit geringerer Dichte expandiert. Dieses weitere Expandieren erfolgt durch Verschäumen (sog. Nachschäumen), und man erhält auf diese Weise ein expandiertes, nachgeschäumtes Polyolefin mit einer Dichte von 8 bis 70 g/l. Gegenstand der Erfindung ist demnach auch ein Verfahren zur Herstellung von expandiertem Polyolefin mit einer Dichte von 8 bis 70 g/l, dadurch gekennzeichnet, dass man die erfindungsgemäßen, beschichteten, expandierten (vorgeschäumten) Polyolefinpartikel, durch Verschäumen (Nachschäumen) weiter expandiert.

Das Verschäumen (Nachschäumen) erfolgt in üblicher Weise, beispielsweise durch Erwärmen der beschichteten, vorgeschäumten Partikel in üblichen Verschäumungsvorrichtungen, z.B. mit überhitztem Wasserdampf in einem sog. Druckschäumer, wie er zur Verarbeitung von expandierbarem Polystyrol (EPS) üblich ist. Bevorzugt verschäumt man die Partikel bei einer Temperatur, bei der sie erweichen (Erweichungsbereich), z.B. bei Temperaturen von 100 bis 180°C.

Der Druck des Wasserdampfes beim Verschäumen (Nachschäumen) beträgt üblicherweise 2 bis 8, bevorzugt 2,5 bis 4 bar (absolut). Dabei ergeben höhere Drucke geringere Dichten des Polyolefins, d.h. mit dem Wasserdampfdruck kann man die gewünschte Dichte einstellen. Die Dauer des Verschäumens beträgt 5 bis 300, bevorzugt 20 bis 60 sec.

Nach dem Verschäumen wird entspannt und abgekühlt.

Bevorzugt beträgt der Expansionsfaktor beim Verschäumen (Nachschäumen) 1,5 bis 10 und insbesondere 2 bis 5, d.h. beim Nachschäumen vergrößern die beschichteten, expandierten Partikel ihr Volumen um das 1,5- bis 10-fache, insbesondere um das 2-bis 5-fache.

Man kann die vorgeschäumten, beschichteten Partikel ohne weitere Vorbehandlung verschäumen (nachschäumen) wie vorstehend beschrieben. Bevorzugt unterwirft man jedoch vor dem Nachschäumen die vorgeschäumten Partikel einer Überdruckbehandlung, indem man sie einem Überdruck von 1 bis 10, bevorzugt 2 bis 6 bar aussetzt. Die Dauer der Überdruckbehandlung kann z.B. 1 bis 50, bevorzugt 3 bis 20 Stunden beim genannten End-Überdruck, betragen. Die Temperatur ist in der Regel nicht kritisch und beträgt üblicherweise 10 bis 100°C, z.B. Raumtemperatur 23°C.

Demnach ist in einer bevorzugten Ausführungsform das Verfahren dadurch gekennzeichnet, dass man die expandierten (vorgeschäumten) Polyolefinpartikel vor dem Verschäumen (Nachschäumen) 1 bis 20 Stunden lang einem Überdruck von 2 bis 6 bar aussetzt. Durch die Überdruckbehandlung werden die vorgeschäumten Partikel vor dem Nachschäumen mit Druckluft beladen, was das Nachschäumen erleichtert und bessere Schäumergebnisse bringt.

Bei der Überdruckbehandlung wird bevorzugt der Druck über einen bestimmten Zeitraum hinweg aufgebaut, bis der Enddruck erreicht ist, wobei dieser Druckgradient z.B. linear, stufenweise oder exponentiell sein kann. Besonders bevorzugt dauert es 2 bis 20, insbesondere 4 bis 12 Stunden bis zum Erreichen des End-Überdrucks. Die vorstehenden Druckangaben beziehen sich auf diesen End-Überdruck, und der Enddruck wird für die vorstehend genannte Dauer konstant gehalten.

Die Überdruckbehandlung kann z.B. in einem druckfesten Tank oder anderen geeigneten Behältern vorgenommen werden, wobei man erforderlichenfalls umwälzen kann, z.B. durch eingeblasene Warmluft. Nach der Überdruckbehandlung kann man den Tankinhalt in einen Zwischentank überführen. Danach können die mit Druckluft beladenen Partikel entnommen, und anschließend verschäumt (nachgeschäumt) werden wie beschrieben.

Die erfindungsgemäße Antiverklebungsmittelbeschichtung hat den weiteren Vorteil, dass sie die Überdruckbehandlung erleichtert, insbesondere ihre Dauer verringert.

Die Dichte des auf diese Weise erhaltenen expandierten, nachgeschäumten Polyolefins wird durch die Einsatzstoffe, u.a. Art, Dichte und Gasgehalt der eingesetzten, vorgeschäumten Polyolefinpartikel, und die Verfahrensbedingungen, z.B. Temperatur, Druck und Dauer des Nachschäumens, Druck und Dauer der Überdruckbehandlung, etc., bestimmt und beträgt erfindungsgemäß 8 bis 120 g/l. Bevorzugt liegt die Dichte bei 15 bis 70 g/l, insbesondere bei 15 bis 40 g/l.

Durch das Verschäumen (Nachschäumen) der vorgeschäumten, mit dem Antiverklebungsmittel beschichteten, und bevorzugt mit Druckluft beladenen Partikel erhält man ein expandiertes (nachgeschäumtes) Polyolefin mit einer Dichte von 8 bis 70 g/l. Dieses Polyolefin ist ebenfalls Gegenstand der Erfindung. Zumeist ist es partikelförmig, und in diesem Fall ist die genannte Dichte die Schüttdichte der erhaltenen Polyolefinpartikel. Jedoch können die Partikel auch bereits beim Verschäumen miteinander verschweißen.

Das erfindungsgemäße, nachgeschäumte Polyolefin, z.B. die Partikel, kann ebenfalls mit DSC untersucht werden wie weiter oben bereits beschrieben. Bevorzugt weisen auch die nachgeschäumten Partikel (ebenso wie die vorgeschäumten Partikel) im DSC-Diagramm einen Doppelpeak auf, wie er in Fig. 1 dargestellt ist.

Besonders bevorzugt verändert sich das Peakflächenverhältnis F, definiert nach obiger Formel (1), durch das Nachschäumen nicht bzw. nicht wesentlich, d.h. beim Nachschäumen bleibt F konstant bzw. nahezu konstant.

Ganz besonders bevorzugt weist auch das erfindungsgemäße, nachgeschäumte Polyolefin, z.B. die nachgeschäumten Polyolefinpartikel, ein Peakflächenverhältnis F = b/a , definiert wie vor, von 0,03 bis 0,85 ($\pm$0,02), insbesondere von 0,05 bis 0,8 ($\pm$0,02) und vorzugsweise 0,1 bis 0,5 ($\pm$0,02) auf. Dabei bedeutet ($\pm$0,02), dass eine verfahrensbedingte Schwankungsbreite (Streuung) von $\pm$0,02 zu berücksichtigen ist.

Demnach ist in einer bevorzugten Ausführungsform das Verfahren zur Herstellung des expandierten Polyolefins mit einer Dichte von 8 bis 70 g/l dadurch gekennzeichnet, dass das Polyolefin im DSC-Diagramm einen Doppelpeak aufweist, und das Peakflächenverhältnis F 0,05 bis 0,8 ($\pm$0,02) beträgt, wobei F definiert ist als

$$F = \frac{\text{Fläche unter dem bei höherer Temperatur gelegenen Peak}}{\text{Fläche unter dem bei niedrigerer Temperatur gelegenen Peak.}}$$

Die erfindungsgemäßen nachgeschäumten Polyolefinpartikel mit einer Dichte von 8 bis 70 g/l lassen sich ohne weitere Behandlung zu Formkörpern verschweißen. Insbesondere behindert das Antiverklebungsmittel nicht das gewünschte Verschweißen, d.h. es stört bei der Formteilherstellung nicht. Daher ist es nicht erforderlich, das Antiverklebungsmittel durch Nachbehandlung zu entfernen.

Die erfindungsgemäßen Verfahren bzw. die damit erhältlichen Partikel haben mehrere Vorteile: mit dem (zuerst beschriebenen) Verfahren erhält man vorgeschäumte beschichtete Partikel mit einer Dichte von 40 bis 150 g/l, die nicht verkleben. Sie sind lagerstabil können problemlos transportiert werden. Aus den vorgeschäumten Partikeln lassen sich mit dem (zuletzt beschriebenen) Verfahren durch Nachschäumen Polyolefinpartikel mit einer Dichte von 8 bis 70 g/l ohne Verkleben herstellen, die problemlos zu Formteilen verarbeitet werden können.

Beispiele:

Alle Druckangaben sind Absolutdrucke, sofern nicht anders angegeben.

Beispiel 1 a: Herstellung der beschichteten, expandierten (vorgeschäumten) Partikel

a) Herstellung der expandierten Partikel durch Vorschäumen

In einem geschlossenen Rührkessel wurden unter Rühren 100 kg eines Propylen-Etylen-Randomcopolymeren mit 2 Gew.-% Ethylengehalt, und 4 kg Tricalciumphosphat in 275 kg Wasser bei 30°C dispergiert. Nach Zugabe von 12 kg n-Butan erhitzte man den Reaktorinhalt auf 135°C, wobei sich ein Druck von ca. 18 bar einstellte. Danach entspannte man den Reaktorinhalt durch eine im Reaktorboden befindliche Düse in einen Zwischenbehälter, in dem sich ein Druck von 1,5 bar aufbaute. Die expandierten Polypropolylenpartikel wurden abgetrennt, das Tricalciumphosphat wurde durch Behandeln mit Salpetersäure entfernt und die Partikel im Stromtrockner getrocknet. Die Schüttdichte der expandierten (vorgeschäumten) Partikel betrug 83,2 g/l.

b) Aufbringen der Antiverklebungsmittelbeschichtung

Aus

- 60 Gew.-% Calciumstearat,
- 35 Gew.-% hydrophober Kieselsäure Aerosil® R 972 von Fa. Degussa, und
- 5 Gew.-% Glycerintristearat

wurde durch intensives Vermischen bei 23°C eine pulverförmige, gut rieselfähige Antiverklebungsmittelbeschichtung hergestellt. In einem Schaufelmischer wurden 9,9 kg der unter a) erhaltenen expandierten Polypropylenpartikel und 0,1 kg des Antiverklebungsbeschichtungsmittels bei 23°C gemischt und so auf die Partikel aufgebracht. Die Mischzeit betrug 10 min.

Beispiel 1 b: Nachschäumen der erhaltenen Partikel

Die in Beispiel 1 a erhaltenen, beschichteten, vorgeschäumten Polypropylenpartikel wurden einer Überdruckbehandlung unterzogen. Dazu wurden die Partikel in einen Tank gegeben, dieser verschlossen und der Druck bei 23°C innerhalb 8 Stunden linear erhöht, bis ein End-Überdruck von 4 bar erreicht war. Man hielt 10 Stunden bei diesem Druck.
Die druckbeladenen Partikel wurden in einem gerührten Druckschäumer, wie er zur Verarbeitung von expandierbarem Polystyrol üblich ist, mit Wasserdampf aufgeschäumt. Der Wasserdampfdruck konnte bis 3,70 bar erhöht werden, ohne dass die Partikel miteinander verklebten. Bei diesem Wasserdampfdruck von 3,70 bar erhielt man Partikel mit einer Schüttdichte von 20,4 g/l.
Erst bei einem Wasserdampfdruck von 3,86 bar verklebten die Partikel miteinander.

Vergleichsbeispiel V1:

Es wurde vorgegangen wie in Beispiel 1 a und b beschrieben, jedoch wurde keine Antiverklebungsmittelbeschichtung aufgebracht. Bei einem Wasserdampfdruck von 2,71 bar erhielt man Partikel mit einer Schüttdichte von 28,5 g/l. Bereits bei einem Wasserdampfdruck von 2,92 bar verklebten die Partikel miteinander.

Beispiel 2:

Es wurde vorgegangen wie in Beispiel 1a und b beschrieben, jedoch wurde bei der Herstellung der beschichteten, expandierten Partikel (siehe Beispiel 1 a) 20 kg n-Butan eingesetzt und der Reaktorinhalt auf 127°C erhitzt. Die Schüttdichte der expandierten (vorgeschäumten) Partikel betrug 56,3 g/l.
Der Wasserdampfdruck konnte bis 3,6 bar erhöht werden, ohne dass die Partikel miteinander verklebten. Bei diesem Wasserdampfdruck von 3,6 bar erhielt man Partikel mit einer Schüttdichte von 15,1 g/l. Erst bei einem Wasserdampfdruck von 3,83 bar verklebten die Partikel miteinander

Vergleichsbeispiel V2:

Es wurde vorgegangen wie in Beispiel 2 beschrieben, jedoch wurde keine Antiverklebungsmittelbeschichtung aufgebracht. Bei einem Wasserdampfdruck von 2,85 bar erhielt man Partikel mit einer Schüttdichte von 20,8 g/l. bereits bei einem Wasserdampfdruck von 3,14 bar verklebten die Partikel miteinander.
Die Beispiele zeigen, das sich mit den erfindungsgemäßen Verfahren Partikel mit deutlich besseren Eigenschaften herstellen ließen.

Beispiel 3

Analog Beispiel 1 a hergestellte Schaumpartikel der Schüttdichte 96,8 kg/m$^3$ wurden wie in Beispiel 1 a, Punkt b beschrieben beschichtet. Das Nachschäumen erfolgte wie in Beispiel 1 b, jedoch ohne Überdruckbehandlung. Bei einem Wasserdampfdruck von 3,47 bar erhielt man ohne Verklebung Schaumpartikel mit einer Schüttdichte von 47,2 kg/m$^3$.

Vergleichsbeispiel V3

Es wurde vorgegangen wie im Beispiel 3 beschrieben, jedoch wurde keine Antiverklebungsmittelbeschichtung aufgebracht. Be einem Wasserdampfdruck vom 1,73 bar erhielt man Partikel mit einer Schüttdichte von 87,9 kg/m$^3$. Bereits bei einem Wasserdampfdruck von 1,90 bar verklebten die Partikel miteinander.

**Patentansprüche**

1.   Verfahren zur Herstellung von beschichteten, expandierten Polyolefinpartikeln mit einer Schüttdichte von 40 bis 200 g/l, **dadurch gekennzeichnet, dass** man

   a) ein Polyolefingranulat in Suspension unter Überdruck bei mindestens 100°C mit einem Treibmittel imprägniert und danach die Suspension bei mindestens 100°C schlagartig entspannt, wobei die imprägnierten Polyolefinpartikel zu expandierten Polyolefinpartikeln aufschäumen, und
   b) auf die expandierten Polyolefinpartikel eine Antiverklebungsmittelbeschichtung aufbringt, die hydrophile oder hydrophobe Kieselsäure, oder ein Metallsalz, einen Ester oder ein Amid einer langkettigen Carbonsäure, oder deren Mischungen, enthält.

2.   Verfahren nach Anspruch 1, **dadurch gekennzeichnet, dass** man als Polyolefin ein Polypropylen verwendet.

3.   Verfahren nach den Ansprüchen 1 bis 2, **dadurch gekennzeichnet, dass** die langkettige Carbonsäure Stearinsäure ist.

4.   Verfahren nach den Ansprüchen 1 bis 3, **dadurch gekennzeichnet, dass** man als Metallsalz einer langkettigen Carbonsäure ein Metallstearat verwendet, wobei das Metall ausgewählt ist aus Ca, Mg, Al, Zn und Ba.

5.   Verfahren nach den Ansprüchen 1 bis 4, **dadurch gekennzeichnet, dass** man die Antiverklebungsmittelbeschichtung durch Sprühen oder Trommeln auf die expandierten Polyolefinpartikel aufbringt.

6.   Expandierte Polyolefinpartikel mit einer Schüttdichte von 40 bis 200g/l, erhältlich nach dem Verfahren gemäß den Ansprüchen 1 bis 5.

7.   Verfahren zur Herstellung von expandiertem Polyolefin mit einer Dichte von 8 bis 120 g/l, **dadurch gekennzeichnet, dass** man die expandierten (vorgeschäumten) Polyolefinpartikel gemäß Anspruch 6, durch Verschäumen (Nachschäumen) weiter expandiert.

8.   Verfahren nach Anspruch 7, **dadurch gekennzeichnet, dass** man die expandierten (vorgeschäumten) Polyolefinpartikel vor dem Verschäumen (Nachschäumen) 1 bis 20 Stunden lang einem Überdruck von 2 bis 6 bar aussetzt.

9.   Verfahren nach den Ansprüchen 7 bis 8, **dadurch gekennzeichnet, dass** der Expansionsfaktor beim Verschäumen (Nachschäumen) 1,5 bis 10 beträgt.

10. Verfahren nach den Ansprüchen 7 bis 9, **dadurch gekennzeichnet, dass** das Polyolefin im DSC-Diagramm einen Doppelpeak aufweist, und das Peakflächenverhältnis F 0,05 bis 0,8 ($\pm$0,02) beträgt, wobei F definiert ist als

$$F = \frac{\text{Fläche unter dem bei höherer Temperatur gelegenen Peak}}{\text{Fläche unter dem bei niedrigerer Temperatur gelegenen Peak}}$$

11. Expandiertes Polyolefin mit einer Dichte von 8 bis 120 g/l, erhältlich nach dem Verfahren gemäß den Ansprüchen 7 bis 10.

12. Expandiertes Polyolefin nach Anspruch 11, **dadurch gekennzeichnet, dass** es ein Peakflächenverhältnis F, definiert wie in Anspruch 10, von 0,05 bis 0,8 ($\pm$0,02) aufweist.

**Claims**

1. A process for producing coated, expanded polyolefin beads having a bulk density of from 40 to 200 g/l, which comprises

   a) impregnating a polyolefin granule in suspension with a blowing agent under elevated pressure at at least 100°C and then abruptly decompressing the suspension at at least 100°C, in the course of which the impregnated polyolefin beads foam to form expanded polyolefin beads, and
   b) applying an antiadhesive coating to the expanded polyolefin beads, said coating comprising hydrophilic or hydrophobic silica, or a metal salt, an ester or an amide of a long-chain carboxylic acid, or mixtures thereof.

2. The process according to claim 1, wherein the polyolefin used is a polypropylene.

3. The process according to claims 1 to 2, wherein the long-chain carboxylic acid is stearic acid.

4. The process according to claims 1 to 3, wherein the metal salt of a long-chain carboxylic acid used is a metal stearate, and the metal is selected from Ca, Mg, Al, Zn and Ba.

5. The process according to claims 1 to 4, wherein the antiadhesive coating is applied to the expanded polyolefin beads by spraying or tumbling.

6. Expanded polyolefin beads having a bulk density of from 40 to 200 g/l, obtainable by the process according to claims 1 to 5.

7. A process for producing expanded polyolefin having a density of from 8 to 120 g/l, which comprises further expanding the expanded (prefoamed) polyolefin beads according to claim 6 by refoaming (afterfoaming).

8. The process according to claim 7, wherein the expanded (prefoamed) polyolefin beads are subjected to an elevated pressure of from 2 to 6 bar for from 1 to 20 hours before the refoaming (afterfoaming).

9. The process according to claims 7 to 8, wherein the expansion factor in the course of refoaming (afterfoaming) is from 1.5 to 10.

10. The process according to claims 7 to 9, wherein the polyolefin, in the DSC diagram, has a double peak, and the peak area ratio F is from 0.05 to 0.8 ($\pm$ 0.02) where F is defined as

```
         area under the peak located at higher temperature
F  =  --------------------------------------------------
         area below the peak located at lower temperature
```

11. Expanded polyolefin having a density of from 8 to 120 g/l, obtainable by the process according to claims 7 to 10.

12. Expanded polyolefin according to claim 11, which has a peak area ratio F, as defined in claim 10, of from 0.05 to 0.8 ($\pm$ 0.02).

**Revendications**

1. Procédé de préparation de particules de polyoléfine expansées, revêtues, ayant une densité apparente de 40 à 200 g/l, **caractérisé en ce que** le procédé comprend les étapes consistant à :

   a) imprégner un granulat de polyoléfine en suspension en surpression à au moins 100 °C avec un agent gonflant, puis produire une détente brutale de la suspension à au moins 100 °C, les particules de polyoléfine imprégnées moussant pour donner des particules de polyoléfine expansées, et
   b) appliquer, sur les particules de polyoléfine expansées, un revêtement antiadhésif, qui contient un acide silicique hydrophile ou hydrophobe, ou un sel métallique, un ester ou un amide d'un acide carboxylique à longue chaîne, ou leurs mélanges.

2. Procédé selon la revendication 1, **caractérisé en ce qu'**un polypropylène est utilisé en tant que polyoléfine.

3. Procédé selon les revendications 1 à 2, **caractérisé en ce que** l'acide carboxylique à longue chaîne est de l'acide stéarique.

4. Procédé selon l'une quelconque des revendications 1 à 3, **caractérisé en ce qu'**un stéarate métallique est utilisé en tant que sel métallique d'un acide carboxylique à longue chaîne, le métal étant choisi parmi Ca, Mg, Al, Zn et Ba.

5. Procédé selon l'une quelconque des revendications 1 à 4, **caractérisé en ce que** le revêtement antiadhésif est appliqué par aspersion ou tonnelage sur les particules de polyoléfine expansées.

6. Particules de polyoléfine expansées ayant une densité apparente de 40 à 200 g/l, pouvant être obtenues par le procédé selon l'une quelconque des revendications 1 à 5.

7. Procédé de préparation de polyoléfine expansée ayant une densité de 8 à 120 g/l, **caractérisé en ce que** les particules de polyoléfine expansées (prémoussées) selon la revendication 6 sont expansées de manière supplémentaire par moussage à coeur (remoussage).

8. Procédé selon la revendication 7, **caractérisé en ce que** les particules de polyoléfine expansées (prémoussées) sont exposées avant le moussage à coeur (remoussage) pendant 1 à 20 heures à une surpression de 2 à 6 bars.

9. Procédé selon les revendications 7 à 8, **caractérisé en ce que** le facteur d'expansion lors du moussage à coeur (remoussage) est de 1,5 à 10.

10. Procédé selon les revendications 7 à 9, **caractérisé en ce que** la polyoléfine présente un double pic dans le diagramme DSC, et que le rapport F des surfaces sous pic est de 0,05 à 0,8 ($\pm$ 0,02), F étant défini en tant que

```
       Surface sous le pic survenant à température plus élevée
F  =  --------------------------------------------------------
       Surface sous le pic survenant à température moins élevée
```

11. Polyoléfine expansée ayant une densité de 8 à 120 g/l, pouvant être obtenue par le procédé selon l'une quelconque des revendications 7 à 10.

12. Polyoléfine expansée selon la revendication 11, **caractérisée en ce qu'**elle présente un rapport F des surfaces sous pic, défini comme dans la revendication 10, de 0,05 à 0,8 ($\pm$ 0,02).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0129119 A
- DE 19541725 C1
- JP 60181139 A
- JP 58152027 A
- WO 02062882 A1
- EP 1095971 A
- WO 9910419 A
- WO 02062882 A
- EP 963827 B